Europäisches Patentamt

European Patent Office

Office européen des brevets

(19)

(11)  **EP 0 750 199 B1**

(12)  **EUROPÄISCHE PATENTSCHRIFT**

(45) Veröffentlichungstag und Bekanntmachung des Hinweises auf die Patenterteilung:
**11.07.2001   Patentblatt 2001/28**

(51) Int Cl.$^7$: **G01S 11/14**

(21) Anmeldenummer: **96810349.9**

(22) Anmeldetag: **31.05.1996**

(54) **Verfahren zur Bestimmung der Geschwindigkeit eines Fahrzeuges**

Method of determination of speed of a vehicle

Procédé de détermination de la vitesse d'un véhicule

(84) Benannte Vertragsstaaten:
**AT ES FR GB IT SE**

(30) Priorität: **20.06.1995  DE 19522265**

(43) Veröffentlichungstag der Anmeldung:
**27.12.1996   Patentblatt 1996/52**

(73) Patentinhaber: **ABB RESEARCH LTD.**
**8050 Zürich (CH)**

(72) Erfinder: **Deck, Bernhard**
**79761 Waldshut-Tiengen (DE)**

(74) Vertreter: **ABB Patent Attorneys**
**c/o ABB Business Services Ltd,**
**Intellectual Property (SLE-I),**
**Haselstrasse 16/699**
**5401 Baden (CH)**

(56) Entgegenhaltungen:
**DE-A- 3 331 837          GB-A- 884 830**
**US-A- 3 729 993**

- **ELEKTRONIK, Bd. 41, Nr. 12, 9.Juni 1992, Seiten 64-68, 73 - 74, XP000306091 KINDERLING E: "MASCHINEN KOMMUNIZIEREN DRAHTLOS TEIL 2. ULTRASCHALL BIETET VOELLIG NEUE WEGE IN DER INDUSTRIELLEN KOMMUNIKATION"**

**Beschreibung**

TECHNISCHES GEBIET

Bei der Erfindung wird ausgegangen von einem Verfahren zur Bestimmung der Geschwindigkeit eines Fahrzeuges nach dem Oberbegriff des Patentanspruchs 1.

STAND DER TECHNIK

Mit dem Oberbegriff des Patentanspruchs 1 nimmt die Erfindung auf einen Stand der Technik Bezug, wie er aus der DE 2519196 C3 bekannt ist. Dort ist eine Anordnung zur digitalen Messung der Geschwindigkeit eines Schienenfahrzeuges angegeben, bei der mittels eines am Fahrzeug angeordneten Senders magnetische Marken auf die Fahrschiene aufgebracht und mittels eines vom Sender beabstandeten Empfängers beim Vorbeifahren an der Marke detektiert werden. Für genaue Messungen bei hohen Fahrzeuggeschwindigkeiten ist dieses Meßverfahren nicht geeignet.

Durch Eckart Kinderling, Maschinen kommunizieren drahtlos, Zeitschrift Elektronik 12/1992, S. 64 - 74, ist es bekannt, Ultraschall zur Übertragung von Informationen von sich bewegenden Objekten auf feste Anlagenteile zu verwenden, z. B. von einer Schiene über das Rad zum Lager eines Fahrzeugs oder bei einer Tiefbohrung vom Bohrkopf über mehrere Lager zu einer Zwischenstation.

DARSTELLUNG DER ERFINDUNG

Die Erfindung, wie sie im Patentanspruch 1 definiert ist, löst die Aufgabe, ein Verfahren zur Bestimmung der Geschwindigkeit eines Fahrzeuges anzugeben, bei dem die Informationsübertragung über sich bewegende Objekte auf feste Anlagenteile mittels eines Kennsignals genutzt wird.

Vorteilhafte Ausgestaltungen der Erfindung sind in den abhängigen Patentansprüchen definiert.

Ein Vorteil der Erfindung besteht darin, daß Verschmutzungsund Übertragungsprobleme bei der Meßwerterfassung eliminiert sind. Ein- und Auskoppelpunkte für Meßsignale sind flexibel wählbar. Die benötigte Meßeinrichtung läßt sich in ein Schienenfahrzeug unkompliziert nachinstallieren.

Gemäß einer vorteilhaften Ausgestaltung der Erfindung kann ein einfacher Ultraschall-Sinusgenerator zur Erzeugung der Kennsignale verwendet werden.

KURZE BESCHREIBUNG DER ZEICHNUNGEN

Die Erfindung wird nachstehend anhand von Ausführungsbeispielen erläutert. Es zeigen:

Fig. 1     ein Fahrzeug mit ortsfesten Sende- und Empfangspositionen für eine Ultraschallübertragung von Fahrzeugrädern zur und von einer Fahrschiene,

Fig. 2     ein Blockdiagramm einer Geschwindigkeits-Meßeinrichtung im Fahrzeug gemäß Fig. 1 in Verbindung mit einer Fahrschiene und

Fig. 3     Signaldiagramme zur Erläuterung der Geschwindigkeitsmessung mit der Geschwindigkeits-Meßeinrichtung gemäß Fig. 2.

WEGE ZUR AUSFÜHRUNG DER ERFINDUNG

In den Figuren sind gleiche Teile mit gleichen Bezugszeichen gekennzeichnet.

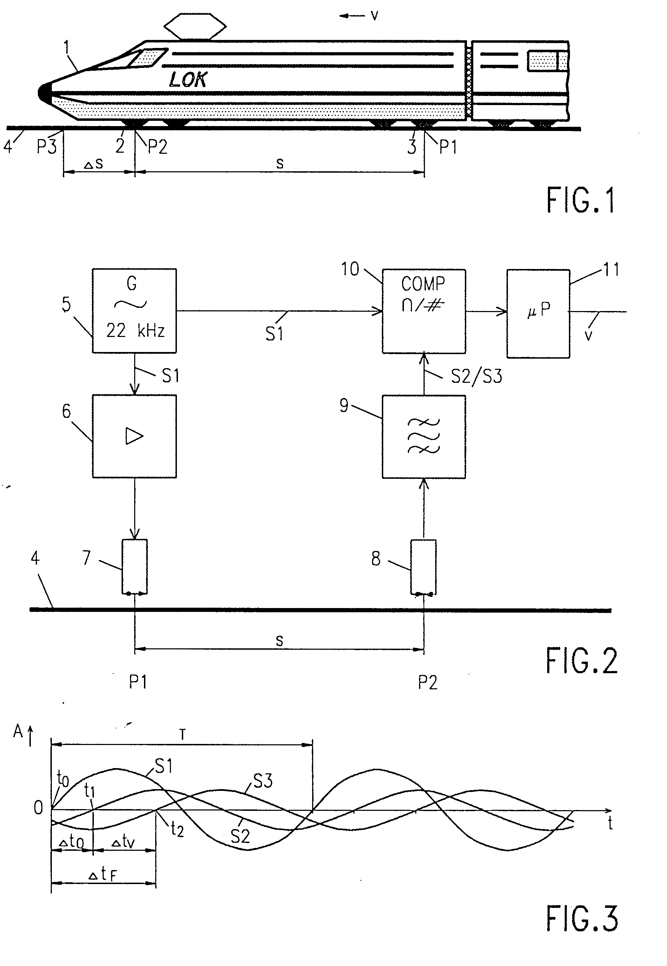

Von einer Lokomotive bzw. von einem Fahrzeug (1), das mit einer zu bestimmenden Fahrzeuggeschwindigkeit (v) in eine durch einen Pfeil angegebene Richtung fährt, werden in einer ortsfesten Sendeposition (P1) im Fahrzeug (1) über ein Hinterrad (3) Ultraschallschwingungen auf eine Fahrschiene bzw. einen Schalleiter (4) übertragen. In einer ortsfesten Empfangsposition (P2) im Fahrzeug (1), welche von dieser Sendeposition (P1) einen vorgebbaren Abstand (s) von z. B. 13,8 m aufweist, werden die in der Sendeposition (P1) übertragenen Ultraschallschwingungen über ein Vorderrad (2) des Fahrzeuges (1) zu einem in Fig. 2 dargestellten Wandler bzw. Schallempfänger bzw. Ultraschallempfänger bzw. Schalldetektor (8) übertragen und detektiert.

Der Ultraschall breitet sich im Stahl der Fahrschiene (4) bei 20 °C mit einer bekannten Ausbreitungsgeschwindigkeit c von ca. 5 km/s aus. Ein an der Sendeposition (P1) abgesandtes Sendesignal (S1), vgl. Fig. 3, erreicht die Empfangsposition (P2) im Fahrzeug (1) an einem Empfangsort (P3), welcher vom Sendeort einen Abstand $s + \Delta s$ aufweist, da sich das mit der Fahrzeuggeschwindigkeit (v) bewegte Fahrzeug (1) während einer Laufzeit $(\Delta t_F)$ der Ultraschallschwingungen in der Fahrschiene (4) um eine Wegdifferenz $(\Delta s)$ in seiner Position bezüglich der Fahrschiene (4) fortbewegt bzw. verändert hat. Bei ruhendem Fahrzeug (1) wird ein an der Sendeposition (P1) abgesandtes Sendesignal (S1) in der Empfangsposition (P2) im Abstand (s) nach einer Laufzeit $(\Delta t_0)$ detektiert. Die Laufzeiten $(\Delta t_F)$ und $(\Delta t_0)$ werden mittels der in Fig. 2 dargestellten Geschwindigkeits-Meßeinrichtung erhalten. Aus dem Verhältnis von Wegdifferenz $(\Delta s)$ zu einer Laufzeitendifferenz $\Delta t_v = \Delta t_F - \Delta t_0$ kann die gesuchte Fahrzeuggeschwindigkeit (v) gemäß:

$$v = \Delta s/\Delta t_v = (\Delta t_F \cdot c - s) / (\Delta t_F - \Delta t_0) \qquad (1)$$

mit

$$c = (s + \Delta s)/\Delta t_F \text{ und } \Delta s = \Delta t_F \cdot c - s$$

berechnet werden. Statt über das Hinterrad (3) könnte man die Ultraschallschwingungen auch an der Position (P2) über das Vorderrad (2) senden und an der Position (P1) empfangen. In diesem Fall wäre der Abstand (s) um die Wegdifferenz ($\Delta$s) verkürzt und entsprechend die Laufzeit ($\Delta t_F$). Die gesuchte Fahrzeuggeschwindigkeit (v) wäre gemäß:

$$v = \Delta s / \Delta t_v = (\Delta t_F \cdot c + s) / (\Delta t_F - \Delta t_0) \qquad (2)$$

zu berechnen.

Gemäß dem Blockdiagramm der Geschwindigkeits-Meßeinrichtung der Fig. 2 liefert ein Sinussignalgenerator (5) das Sendesignal (S1) einerseits über einen Verstärker (6) an einen piezoelektrischen Wandler bzw. Schallsender bzw. Ultraschallsender (7) und andererseits an einen Phasendetektor bzw. Vergleicher bzw. Komparator (10). Die Frequenz der vom Sinussignalgenerator (5) abgegebenen Ultraschallschwingungen liegt im Frequenzbereich von 20 kHz - 60 kHz, vorzugsweise bei 22 kHz. Diese Frequenz eignet sich sehr gut für die Erfassung von Fahrzeuggeschwindigkeiten (v) bis 300 km/h.

Der Ultraschallsender (7) in der Sendeposition (P1) überträgt diese Ultraschallschwingungen auf die Fahrschiene (4), von der sie zeitlich verzögert um die Laufzeit ($\Delta t_F$), bei bewegtem Fahrzeug (1), bzw. um die Laufzeit ($\Delta t_0$), bei ruhendem Fahrzeug (1), in der Empfangsposition (P2) eintreffen und mittels eines piezoelektrischen Wandlers bzw. Schallempfängers bzw. Ultraschallempfängers bzw. Schalldetektors (8) empfangen werden. Der Schalldetektor (8) wandelt die empfangenen Ultraschallsignale in elektrische um und leitet diese über einen Störsignalunterdrücker bzw. ein adaptives Bandpaßfilter (9) als Empfangssignal (S2), bei bewegtem Fahrzeug (1), bzw. als Empfangssignal (S3), bei ruhendem Fahrzeug (1), vgl. Fig. 3, zum Komparator (10). Der Komparator (10) ermittelt die Phasenverschiebung $\Delta t_F/T$ bzw. $\Delta t_0/T$ des Empfangssignals (S2) bzw. (S3) bezüglich des Sendesignals (S1) und liefert diese Information einem Rechner oder Mikroprozessor (11). Dieser berechnet auf Grund der aus der Frequenz des Sinussignalgenerators (5) bekannten Periodendauer (T) der Ultraschallschwingungen die Fahrzeuggeschwindigkeit (v) gemäß den oben angegebenen Gleichungen (1) bzw. (2).

Fig. 3 zeigt in einem Signaldiagramm, bei dem auf der Ordinate eine Signalamplitude (A) und auf der Abszisse die Zeit (t) in willkürlichen Einheiten angegeben sind, das Sendesignal (S1) und demgegenüber verzögerte Empfangssignale (S2) und (S3). Aufeinanderfolgende Nulldurchgänge mit positivem Anstieg der Signale (S1, S2, S3) sind mit ($t_0$, $t_1$, $t_2$) bezeichnet.

Das bei ruhendem Fahrzeug (1) detektierte Empfangssignal (S2) ist gegenüber dem Sendesignal (S1) um die Zeitdifferenz bzw. Laufzeit ($\Delta t_0$) verzögert

und das bei bewegtem Fahrzeug (1) detektierte Empfangssignal (S3) um die Laufzeit ($\Delta t_F$). Die Laufzeitendifferenz $\Delta t_v$ ergibt sich als Differenz von ($\Delta t_F$) und ($\Delta t_0$). Der Komparator (10) detektiert zunächst diese Nulldurchgänge mit ansteigender Tendenz als Kennsignale und bestimmt aus deren Aufeinanderfolge die Phasenverschiebung.

Es versteht sich, daß anstelle der Nulldurchgänge mit ansteigender Tendenz z. B. auch diejenigen mit fallender Tendenz verwendet werden könnten. Die Laufzeit ($\Delta t_0$) bleibt im Mikroprozessor (11) gespeichert bis zur nächsten Messung bei ruhendem Fahrzeug (1). Zweckmäßigerweise wird der Abstand (s) so groß wie möglich gewählt, um eine möglichst große Laufzeitendifferenz ($\Delta t_v$) und damit eine möglichst große Meßgenauigkeit zu erhalten.

Wichtig ist, daß die Laufzeit eines Meßsignals zwischen einer ortsfesten Sende- und Empfangsposition (P1, P2) sowohl bei ruhendem als auch bei bewegtem Fahrzeug (1) erfaßt wird. Statt eines akustischen Meßsignals könnte prinzipiell auch ein optisches oder elektrisches Meßsignal verwendet werden. Dabei wäre zweckmäßigerweise der Komparator (10) am Ort des Sinussignalgenerators (5) anzuordnen, um eine gut meßbare Laufzeitendifferenz ($\Delta t_v$) zu erhalten.

Anstelle eines Sinussignals könnten z. B. auch Dreieck- oder Rechtecksignale, ggf. mit Impulspausen, zur Erzeugung von Kennsignalen für die Laufzeitmessung verwendet werden. Dabei könnte die Phasenverschiebung z. B. in Abhängigkeit von einer Anstiegs- oder Abstiegsflanke eines Kennsignals detektiert werden.

BEZEICHNUNGSLISTE

| | |
|---|---|
| 1 | Fahrzeug, Lokomotive |
| 2 | Vorderrad von 1 |
| 3 | Hinterrad von 1 |
| 4 | Schiene, Schalleiter, Signalleiter |
| 5 | Sinussignalgenerator |
| 6 | Verstärker |
| 7 | Schallsender, Ultraschallsender, Wandler |
| 8 | Schallempfänger, Schalldetektor, Ultraschallempfänger, Wandler |
| 9 | Bandpaßfilter, Störsignalunterdrücker |
| 10 | Phasendetektor, Komparator, Vergleicher |
| 11 | Rechner, Mikroprozessor |
| | |
| A | Signalamplitude |
| P1 | Sendeposition in 1 |
| P2 | Empfangsposition in 1 |
| P3 | Empfangsort bei bewegtem Fahrzeug |
| s | Abstand von P1 zu P2 |
| S1 | Sendesignal von 5, Kennsignal |

| S2 | Empfangssignal bei ruhendem Fahrzeug |
| S3 | Empfangssignal bei bewegtem Fahrzeug |
| t | Zeit |
| $t_0$, $t_1$, $t_2$, | Zeitpunkte |
| T | Periodendauer |
| v | Fahrzeuggeschwindigkeit |
| $\Delta s$ | Wegdifferenz |
| $\Delta t_0$ | Zeitdifferenz zwischen $t_1$ und $t_0$ |
| $\Delta t_F$ | Zeitdifferenz zwischen $t_2$ und $t_0$ |
| $\Delta t_v$ | Zeitdifferenz zwischen $t_2$ und $t_1$, Laufzeitdifferenz |

**Patentansprüche**

1. Verfahren zur Bestimmung der Geschwindigkeit (v) eines Fahrzeuges (1) relativ zu einem ortsfesten Signalleiter (4),

   a) welcher mit dem Fahrzeug (1) in Wirkverbindung steht,
   b) wobei in einer vorgebbaren Sendeposition (P1) des Fahrzeuges (1) mindestens ein Kennsignal (S1) an den mindestens einen Signalleiter (4) übertragen wird,
   c) wobei in einer vorgebbaren Empfangsposition (P2) des Fahrzeuges (1), welche von dieser Sendeposition (P1) in Fahrtrichtung oder entgegen der Fahrtrichtung einen vorgebbaren Abstand s aufweist,
   d) dieses mindestens eine Kennsignal (S1) detektiert wird,

   dadurch gekennzeichnet,

   e) daß die Fahrzeuggeschwindigkeit v gemäß:

   $$v = (\Delta t_F \cdot c - s) / (\Delta t_F - \Delta t_0)$$

   berechnet wird, wenn die Sendeposition (P1) in Fahrtrichtung hinter der Empfangsposition (P2) angeordnet ist, oder
   f) gemäß:

   $$v = (\Delta t_F \cdot c + s) / (\Delta t_F - \Delta t_0),$$

   wenn die Sendeposition (P1) in Fahrtrichtung vor der Empfangsposition (P2) angeordnet ist, wobei c die Ausbreitungsgeschwindigkeit des Kennsignals (S1) im Signalleiter (4), $\Delta t_0$ die Laufzeit des Kennsignals (S1) bei ruhendem Fahrzeug (1) und $\Delta t_F$ die Laufzeit des Kennsignals (S1) bei bewegtem Fahrzeug im Signalleiter bedeuten.

2. Verfahren nach Anspruch 1, dadurch gekennzeichnet, daß die Laufzeit $\Delta t_F$ durch Messung der Phasenverschiebung des Empfangssignals (S2, S3) gegenüber dem Sendesignal (S1) bestimmt wird.

3. Verfahren nach einem der vorhergehenden Ansprüche, dadurch gekennzeichnet, daß das Kennsignal (S1) ein Schallsignal und der Signalleiter (4) ein Schalleiter ist.

4. Verfahren nach einem der vorhergehenden Ansprüche, dadurch gekennzeichnet, daß das Schallsignal (S1) ein Ultraschallsignal im Frequenzbereich von 20 kHz - 60 kHz ist.

5. Verfahren nach einem der vorhergehenden Ansprüche, dadurch gekennzeichnet, daß das Kennsignal (S1) von einem sinusförmigen Signal abgeleitet ist.

6. Verfahren nach einem der vorhergehenden Ansprüche, dadurch gekennzeichnet, daß das Kennsignal (S1) über mindestens ein Fahrzeugrad (3) auf eine metallische Fahrschiene (4) übertragen und von dieser über ein weiteres Fahrzeugrad (2) einem Komparator (10) zugeführt wird.

**Claims**

1. Method for determining the speed (v) of a vehicle (1) relative to a fixed-position signal conductor (4),

   a) which is operatively connected to the vehicle (1),
   b) with at least one identification signal (S1) being transmitted to the at least one signal conductor (4) when the vehicle (1) is in a transmitting position (P1) which can be predetermined,
   c) in which case, when the vehicle (1) is in a receiving position (P2) which can be predetermined and is at a distance s which can be predetermined, from this transmitting position (P1) in the direction of travel or in the opposite direction to the direction of travel,
   d) this at least one identification signal (S1) is detected, characterized
   e) in that the vehicle speed is calculated in accordance with:

   $$v = (\Delta t_F \cdot c - s) / (\Delta t_F - \Delta t_0)$$

   if the transmitting position (P1) is arranged behind the receiving position (P2) in the direction of travel, or
   f) in accordance with:

$$v = (\Delta t_F \cdot c + s) / (\Delta t_{F\_} \Delta t_0)$$

if the transmitting position (P1) is arranged in front of the receiving position (P2) in the direction of travel, with c being the propagation speed of the identification signal (S1) in the signal conductor (4), $\Delta t_0$ being the delay time of the identification signal (S1) when the vehicle (1) is stationary, and $\Delta t_F$ being the delay time of the identification signal (S1) in the signal conductor when the vehicle is moving.

2. Method according to Claim 1, characterized in that the delay time $\Delta t_F$ is determined by measuring the phase shift between the received signal (S2, S3) and the transmitted signal (S1).

3. Method according to one of the preceding claims, characterized in that the identification signal (S1) is a sound signal, and the signal conductor (4) is a sound conductor.

4. Method according to one of the preceding claims, characterized in that the sound signal (S1) is an ultrasound signal in the frequency range between 20 kHz and 60 kHz.

5. Method according to one of the preceding claims, characterized in that the identification signal (S1) is derived from a sinusoidal signal.

6. Method according to one of the preceding claims, characterized in that the identification signal (S1) is transmitted via at least one vehicle wheel (3) to a metallic rail (4), and is supplied there from via a further vehicle wheel (2) to a comparator (10).

## Revendications

1. Procédé de détermination de la vitesse (v) d'un véhicule (1) par rapport à un conducteur de signal (4) fixe,

   a) qui se trouve en liaison active avec le véhicule (1),
   b) au moins un signal d'identification (S1) étant transmis audit au moins un conducteur de signal (4) en un point d'émission (P1) prédéfini du véhicule (1),
   c) ledit au moins un signal d'identification (S1) étant détecté
   d) en un point de réception (P2) prédéfini du véhicule (1), lequel se trouve à un écart s prédéfini de ce point d'émission (P1) dans le sens du déplacement ou dans le sens inverse du déplacement,

caractérisé en ce
e) que la vitesse du véhicule v est calculée d'après l'équation :

$$v = (\Delta t_F * c - s) / (\Delta t_F - \Delta t_0)$$

lorsque le point d'émission (P1) est disposé derrière le point de réception (P2) dans le sens du déplacement, ou
f) d'après l'équation :

$$v = (\Delta t_F * c + s) / (\Delta t_F - \Delta t_0)$$

lorsque le point d'émission (P1) est disposé avant le point de réception (P2) dans le sens de la marche, c désignant la vitesse de propagation du signal d'identification (S1) dans le conducteur de signal (4), $\Delta t_0$ le temps de propagation du signal d'identification (S1) lorsque le véhicule (1) est à l'arrêt et $\Delta t_F$ le temps de propagation du signal d'identification (S1) dans le conducteur de signal lorsque le véhicule est en déplacement.

2. Procédé selon la revendication 1, caractérisé en ce que le temps de propagation $\Delta t_F$ est déterminé en mesurant le déphasage du signal reçu (S2, S3) par rapport au signal émis (S1).

3. Procédé selon l'une des revendications précédentes, caractérisé en ce que le signal d'identification (S1) est un signal sonore et le conducteur de signal (4) est un conducteur de sons.

4. Procédé selon l'une des revendications précédentes, caractérisé en ce que le signal sonore (SI) est un signal à ultrasons dans la gamme des fréquences comprises entre 20 kHz et 60 kHz.

5. Procédé selon l'une des revendications précédentes, caractérisé en ce que le signal d'identification (S1) est dérivé d'un signal sinusoïdal.

6. Procédé selon l'une des revendications précédentes, caractérisé en ce que le signal d'identification (S1) est transmis sur un rail (4) métallique par au moins une roue du véhicule (2) et qu'il est acheminé de là vers un comparateur (10) par le biais d'une autre roue du véhicule (2).

FIG.1

FIG.2

FIG.3